# EUROPEAN PATENT APPLICATION

(11) **EP 4 583 589 A1**
(43) Date of publication of application: **09.07.2025**
(21) Application number: 23859446.9
(22) Date of filing: 31.08.2023
(51) Int. Cl.: H04W 52/02, H04W 72/04

(54) **MODE DETERMINATION METHOD, DEVICE, AND STORAGE MEDIUM**

(30) Priority: 31.08.2022 CN 202211056835
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); CHEN, Mengzhu, Shenzhen, Guangdong 518057 (CN); HU, Youjun, Shenzhen, Guangdong 518057 (CN)
(74) Representative: Aipex B.V.
(86) International application number: PCT/CN2023/116069
(87) International publication number: WO 2024/046417

(57) **Abstract**

Provided are a mode determination method, a device and a storage medium. The method includes: determining, by a terminal, a measurement mode and/or a working mode according to a predefined manner. The terminal can determine the measurement mode and/or the working mode according to the predefined manner so that the power consumption of the terminal can be reduced and the life of the terminal can be prolonged.

## Description

### TECHNICAL FIELD

Embodiments of the present application relate to the field of communications and, in particular, to a mode determination method, a device and a storage medium.

### BACKGROUND

Wireless communication technology is pushing the world into an increasingly connected and networked society. High-speed and low-latency wireless communication relies on efficient network resource management and allocation among one or more user equipments and one or more wireless access network nodes (including but not limited to base stations). Next-generation networks are expected to provide high-speed, low-latency and ultra-reliable communication capabilities to meet the needs of different industries and users.

To meet the requirements of battery life, it is particularly important for the terminal to reduce the power consumption of the terminal during data transmission.

### SUMMARY

Embodiments of the present application provide a mode determination method, a device and a storage medium. The measurement mode and/or working mode of the terminal can be determined, thereby reducing the power consumption of the terminal. In this manner, not only can the energy be saved, but also the life of the terminal can be prolonged.

To achieve the above object, embodiments of the present application provide a mode determination method. The mode determination method includes: a measurement mode and/or a working mode are determined by a terminal according to a predefined manner, where the measurement mode includes a first measurement mode and a second measurement mode, and the working mode includes a first working mode and a second working mode.

To achieve the above object, embodiments of the present application provide a mode determination method. The mode determination method includes: a first parameter corresponding to a mode is configured by a base station, where the first parameter includes at least one of mode signaling, a set threshold, set time period, or, a second parameter for determining a time window.

To achieve the above object, embodiments of the present application provide a computer device. The computer device includes a memory, a processor and a computer program stored in the memory and executable by the processor. When executing the program, the processor implements the mode determination method according to the embodiments of the present application.

To achieve the above object, embodiments of the present application provide a computer-readable storage medium having a computer program stored thereon, where the computer program, when executed by a processor, causes the processor to implement the mode determination method according to the embodiments of the present application.

The embodiments of the present application provide the mode determination method, the device and the storage medium, which include: determining, by the terminal, the measurement mode and/or the working mode according to the predefined manner. In this way, the terminal can determine the measurement mode and/or the working mode according to the predefined manner so that the power consumption of the terminal can be reduced. In this manner, not only can the energy be saved, but also the life of the terminal can be prolonged.

### BRIEF DESCRIPTION OF DRAWINGS

FIG. 1 is a schematic diagram of a mode determination method according to an embodiment of the present application.
FIG. 2 is another schematic diagram of a mode determination method according to an embodiment of the present application.
FIG. 3 is another schematic diagram of a mode determination method according to an embodiment of the present application.
FIG. 4 is another schematic diagram of a mode determination method according to an embodiment of the present application.
FIG. 5 is another schematic diagram of a mode determination method according to an embodiment of the present application.
FIG. 6 is another schematic diagram of a mode determination method according to an embodiment of the present application.
FIG. 7 is another schematic diagram of a mode determination method according to an embodiment of the present application.
FIG. 8 is another schematic diagram of a mode determination method according to an embodiment of the present application.
FIG. 9 is another schematic diagram of a mode determination method according to an embodiment of the present application.
FIG. 10 is another schematic diagram of a mode determination method according to an embodiment of the present application.

### DETAILED DESCRIPTION

To make the objects, technical solutions, and advantages of the present application more apparent, embodiments of the present application are described hereinafter in detail in conjunction with drawings. It is to be noted that if not in collision, the embodiments of the present application and features therein may be combined with each other in any manner.

It is to be understood that the embodiments described herein are intended to explain and not to limit the present disclosure.

Terms such as "module", "part" or "unit" used to indicate elements in the subsequent description are merely used to facilitate the description of the present disclosure, and have no particular meaning in themselves. Therefore, "module", "component" or "unit" may be used in a mixed manner.

In the present embodiment, to meet the requirements of battery life, an ultra-low-power wake-up mechanism can be considered being introduced, that is, the user uses a separate receiver to receive a low-power wake-up signal and wakes up the master receiver by using the wake-up signal for data sending and data reception. When the terminal fails to detect a low-power wake-up signal, the master receiver is in a deep sleep state, and the power consumption of the terminal is further reduced in this manner.

To reach the above object, the method provided in the present embodiment is that a terminal determines a measurement mode and/or a working mode according to a predefined manner.

The measurement mode includes a first measurement mode and/or a second measurement mode, and the working mode includes a first working mode and/or a second working mode. The measurement mode may be understood as a measurement mode of the terminal for this cell and/or another cell, and the working mode may be a working mode when the terminal is in a receive state.

The first measurement mode includes any one of: performing relaxed measurement of this cell, performing relaxed measurement of this cell and relaxed measurement of another cell, performing no measurement, performing measurement based on only a low-power wake-up signal (LP-WUS), performing measurement based on only a low-power reference signal (LP-RS), or performing measurement based on an LP-RS within only a first time window.

The first time window may be understood as a time window within the duration of the first measurement mode. The time period of the first time window is less than or equal to the duration of the first measurement mode.

The performing no measurement includes one of the following: a main receiving apparatus of the terminal is not turned on for any measurement; when no LP-WUS based on paging is detected, a main receiving apparatus of the terminal is not turned on for any measurement; or, during an LP-WUS detection, a main receiving apparatus of the terminal is not turned on for a measurement.

The performing relaxed measurement of this cell includes at least one of the following: performing the measurement of this cell once every N discontinuous reception (DRX) cycles, where N is a positive integer greater than 1; or performing the measurement of this cell when paging occurs. Performing the measurement of this cell once every N DRX cycles may be understood as performing the measurement of this cell within one DRX cycle among the N DRX cycles.

The performing relaxed measurement of this cell and relaxed measurement of another cell includes one of performing relaxed measurement of this cell or performing relaxed measurement of another cell. The performing relaxed measurement of this cell and relaxed measurement of another cell includes: performing measurement of this cell and measurement of another cell once every N1 discontinuous reception (DRX) cycles, where the measurement of this cell and the measurement of another cell are within the same DRX cycle; or performing measurement of this cell once every N2 DRX cycles, and performing measurement of another cell once every N3 DRX cycles, where N3 = k × N2, and N1, N2, N3 and k are all positive integers greater than 1.

The second measurement mode includes one of performing traditional measurement of this cell, performing traditional measurement of this cell and relaxed measurement of another cell, or, performing traditional measurement of this cell and performing traditional measurement of another cell.

The performing traditional measurement of another cell includes at least one of performing traditional measurement of another cell in the same frequency, performing traditional measurement of another cell in a different frequency, or performing traditional measurement of another cell in a different system.

The first working mode includes at least one of the following: a main receiving apparatus of the terminal is turned on; or, a low-power receiving apparatus of the terminal is turned off.

The second working mode includes at least one of the following: a low-power receiving apparatus of the terminal is turned on; when the terminal detects an LP-WUS and/or the LP-WUS required to be measured, a main receiving apparatus of the terminal is turned on; the low-power receiving apparatus of the terminal is turned on according to a time window corresponding to the LP-WUS; the low-power receiving apparatus of the terminal is turned on according to configuration of an LP-RS; or the low-power receiving apparatus corresponding to the terminal is turned on according to that a host is turned off.

In an embodiment, determining, by the terminal, the measurement mode and/or the working mode according to the predefined manner may include determining, by the terminal, the measurement mode and/or the working mode according to a switching manner. When the switching manner satisfies a switching condition, the terminal switches alternately between at least one of the second measurement mode or the first working mode and at least one of the first measurement mode or the second working mode.

The switching condition includes: the terminal is in the second measurement mode and/or the first working mode, and first measurement information obtained within a first set time period meets a set rule; and the terminal is in the first measurement mode and/or the second working mode, and second measurement information obtained within a second set time period does not meet a set rule.

In the present embodiment, when the terminal is in the second measurement mode and/or the first working mode and the first measurement information obtained within the first set time period T1 meets the set rule, the terminal switches to the first measurement mode and/or the second working mode, and/or when the terminal is in the first measurement mode and/or the second working mode and the second measurement information obtained within the second set time period T2 does not meet the set rule, the terminal switches to the second measurement mode and/or the first working mode, and so on.

In an embodiment, determining, by the terminal, the measurement mode and/or the working mode according to the predefined manner may include: within a preset period, the terminal is in the second measurement mode within a first preset window, and when third measurement information obtained within the first preset window meets a set rule, the terminal switches to the first measurement mode and/or the second working mode within a second preset window; and/or, within a preset period, the terminal is in the second measurement mode within a first preset window, and when third measurement information does not meet the set rule, the terminal is in the second measurement mode and/or the first working mode within a second preset window. Herein, the preset period consists of the first preset window and the second preset window.

The time period of the preset period is represented by K, and the offset is L. Assuming that the time period of the first preset window is M1, the time period of the second preset window is K-M1.

The first measurement information, the second measurement information and the third measurement information include at least one of signal power of a measurement signal, signal quality of a measurement signal, a signal energy value of a measurement signal, a magnitude of a signal amplitude of a measurement signal, whether the measurement signal is detected, or, the number of detected measurement signals.

The measurement signal may be one or more preset signals within a second time window and the one or more preset signals may be one or more of an LP-RS, an LP-WUS, a synchronization and system information block (SSB), a tracking reference signal (TRS), or, a channel state information-reference signal (CSI-RS).

The set rule includes any one of the following: a measurement value is greater than a set threshold; a reference value minus a measurement value is greater than a set threshold; a mean of multiple measurement values is greater than a set threshold; a mean of measurement values within a second time window is greater than a set threshold; or a mean of multiple measurement values within a third time window is greater than a set threshold.

The set threshold is configured through signaling. The second time window and the third time window each may be understood as a preset time period.

In an embodiment, determining, by the terminal, the measurement mode and/or the working mode according to the predefined manner may include that the terminal is in the second working mode.

The terminal being in the second working mode may be understood as one of the following: the terminal has always been in the second working mode; or after the terminal switches from the RRC connected state to the RRC idle state and/or the RRC inactive state, the terminal is in the second working mode.

In an embodiment, determining, by the terminal, the measurement mode and/or the working mode according to the predefined manner may include alternating, by the terminal, between the first working mode and the second working mode according to the following manner: the terminal is in the second working mode for a third set time period or in the first working mode for a fourth set time period.

In the present embodiment, the terminal is in the second working mode for the third set time period T3 or in the first working mode for the fourth set time period T4.

In an embodiment, determining, by the terminal, the measurement mode and/or the working mode according to the predefined manner may include the terminal is in the first measurement mode.

The terminal being in the first measurement mode may be understood as one of the following: the terminal has always been in the first measurement mode; or after the terminal switches from the RRC connected state to the RRC idle state and/or the RRC inactive state, the terminal is in the first measurement mode.

In an embodiment, determining, by the terminal, the measurement mode and/or the working mode according to the predefined manner may include alternating, by the terminal, between the first measurement mode and the second measurement mode according to the following manner: the terminal is in the first measurement mode for a fifth set time period or in the second measurement mode for a sixth set time period.

In the present embodiment, the terminal is in the first measurement mode for the fifth set time period T5 or in the second measurement mode for the sixth set time period T6.

In an embodiment, it is assumed that the first signaling configured in the system information block (SIB) is signal power with a set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode includes the relaxed measurement of this cell, the relaxed measurement of this cell is to perform the measurement of this cell once every N DRX cycles and the second measurement mode is performing traditional measurement of this cell. Optionally, Sr = QrxSSB - Qoffset1, where QrxSSB is a reference signal received power (RSRP) value obtained according to the SSB, and Qoffset1 is an offset value and consists of one or more parameters.

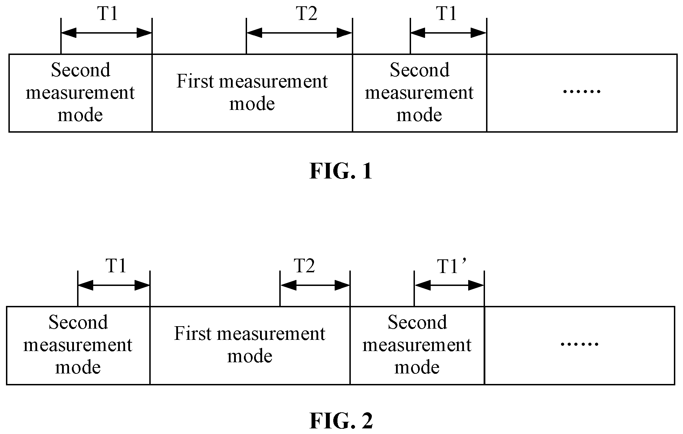

The first signaling is configured in the SIB received by the terminal. When the terminal is in the second measurement mode and each signal power Sr1 of this cell obtained within the measurement time period T1 is greater than or equal to the set threshold being Th1, the terminal switches to the first measurement mode, that is, the terminal performs the measurement of this cell once every N DRX cycles. When the terminal is in the first measurement mode and each signal power Sr2 of this cell obtained within the measurement time period T2 is less than the set threshold being Th1, the terminal switches to the second measurement mode, that is, the terminal performs the measurement of this cell once every DRX cycle. For example, FIG. 1 is a schematic diagram of a mode determination method according to the present embodiment. As shown in FIG. 1, the terminal alternately switches between the first measurement mode and the second measurement mode when the switching condition is satisfied.

In an embodiment, it is assumed that the first signaling configured in the SIB is signal power with a set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode is performing relaxed measurement of this cell, the relaxed measurement of this cell is to perform the measurement of this cell once every N DRX cycles and the second measurement mode is performing traditional measurement of this cell. Optionally, Sr = QrxSSB - Qoffset1, where QrxSSB is an RSRP value obtained according to the SSB, and Qoffset1 is an offset value and consists of one or more parameters.

The first signaling is configured in the SIB received by the terminal. When the terminal is in the second measurement mode and each signal power Sr1 of this cell obtained within the measurement time period T1 is greater than or equal to the set threshold being Th1, the terminal switches to the first measurement mode, that is, the terminal performs the measurement of this cell once every N DRX cycles. When the terminal is in the first measurement mode and each signal power Sr2 of this cell obtained within the measurement time period T2 is less than the set threshold being Th1, the terminal switches to the second measurement mode, that is, the terminal performs the measurement of this cell once every DRX cycle. The rest are done in the same manner. In this case, T1' = T1 + nk, that is, n is the number of occurrences of the first measurement mode, k is a predefined value, and T1' is the duration of the second measurement mode. For example, FIG. 2 is a schematic diagram of a mode determination method according to the present embodiment. As shown in FIG. 2, the terminal alternately switches between the first measurement mode and the second measurement mode when the switching condition is satisfied, and the duration of the second measurement mode is related to the number of occurrences of the first measurement mode.

In an embodiment, it is assumed that the first signaling configured in the SIB is signal power with a set threshold being Th1set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode is performing relaxed measurement of this cell, the relaxed measurement of this cell is to perform the measurement of this cell once every N DRX cycles and the second measurement mode is performing traditional measurement of this cell and traditional measurement of another cell. Optionally, Sr = QrxSSB - Qoffset1, where QrxSSB is an RSRP value obtained according to the SSB, and Qoffset1 is an offset value and consists of one or more parameters.

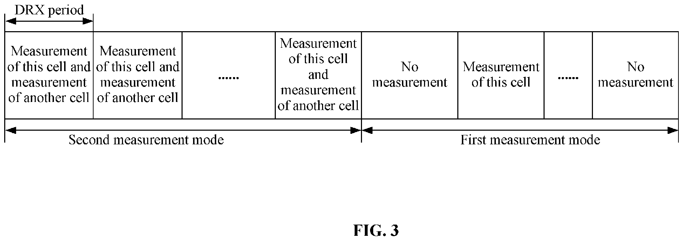

The first signaling is configured in the SIB received by the terminal. When the terminal is in the second measurement mode and each signal power Sr1 of this cell obtained within the measurement time period T1 is greater than or equal to the set threshold being Th1, the terminal switches to the first measurement mode, that is, the terminal performs the measurement of this cell once every N DRX cycles. When the terminal is in the first measurement mode and each signal power Sr2 of this cell obtained within the measurement time period T2 is less than the set threshold being Th1, the terminal switches to the second measurement mode, that is, the terminal performs the measurement of this cell and the measurement of another cell once every DRX cycle. For example, FIG. 3 is a schematic diagram of a mode determination method according to the present embodiment. As shown in FIG. 3, the terminal alternately switches between the first measurement mode and the second measurement mode when the switching condition is satisfied. In the first measurement mode, the measurement of this cell is performed once every N DRX cycles. In the second measurement mode, the measurement of this cell and the measurement of another cell are performed once every DRX cycle.

In an embodiment, it is assumed that the first signaling configured in the SIB is signal power with a set threshold being Th1set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode is performing relaxed measurement of this cell, the relaxed measurement of this cell is to perform the measurement of this cell when paging occurs and the second measurement mode is performing traditional measurement of this cell and relaxed measurement of another cell. Optionally, Sr = QrxSSB - Qoffset1, where QrxSSB is an RSRP value obtained according to the SSB, and

Qoffset1 is an offset value and consists of one or more parameters.

In the present embodiment, when the terminal is in the second measurement mode and the mean of every two Sr1 obtained within the measurement time period T1 is greater than or equal to the set threshold being Th1, the terminal switches to the first measurement mode, that is, the terminal performs the measurement of this cell when paging occurs. When the mean of every two Sr2 obtained by the terminal within T2 of the first measurement mode is less than the set threshold being Th1, the terminal switches to the second measurement mode, that is, the terminal performs the measurement of this cell once every DRX cycle and the relaxed measurement of another cell. The relaxed measurement of this cell can determine whether to relax and how to relax according to the related art, which are not repeated here.

In an embodiment, it is assumed that the first signaling configured in the SIB is signal power with a set threshold being Th1set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode is performing relaxed measurement of this cell and relaxed measurement of another cell, and performing relaxed measurement of this cell and relaxed measurement of another cell is to perform measurement of this cell once every N1 DRX cycles and to perform measurement of another cell once every N1 DRX cycles. It is assumed that the second measurement mode is performing traditional measurement of this cell and traditional measurement of another cell. Optionally, Sr = QrxSSB - Qoffset1, where QrxSSB is an RSRP value obtained according to the SSB, and Qoffset1 is an offset value and consists of one or more parameters.

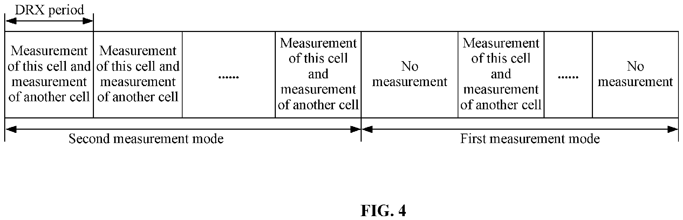

In the present embodiment, when the terminal is in the second measurement mode and each signal power Sr1 of this cell obtained within the measurement time period T1 is greater than or equal to the set threshold being Th1, the terminal switches to the first measurement mode, that is, the measurement of this cell and the measurement of another cell once is performed once every N1 DRX cycles. When the terminal is in the first measurement mode and the mean of every two Sr2 obtained within the measurement time period T2 is less than the set threshold being Th1, the terminal switches to the second measurement mode, that is, the measurement of this cell and the measurement of another cell is performed once every DRX cycle. For example, FIG. 4 is a schematic diagram of a mode determination method according to the present embodiment. As shown in FIG. 4, in the first measurement mode, the measurement of this cell and the measurement of another cell is performed once every N1 DRX cycles. In the second measurement mode, the traditional measurement of this cell and the traditional measurement of another cell is performed, that is, the measurement of this cell and the measurement of another cell is performed once every DRX cycle.

In an embodiment, it is assumed that the first signaling configured in the SIB is signal power with a set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode is performing the relaxed measurement of this cell and the relaxed measurement of another cell, and performing the relaxed measurement of this cell and the relaxed measurement of another cell is to perform the measurement of this cell once every N2 DRX cycles and perform the measurement of another cell once every N3 DRX cycles, where N3 = k×N2. It is assumed that the second measurement mode is performing the traditional measurement of this cell and the traditional measurement of another cell. Optionally, Sr = QrxSSB - Qoffset1, where QrxSSB is an RSRP value obtained according to the SSB, and Qoffset1 is an offset value and consists of one or more parameters.

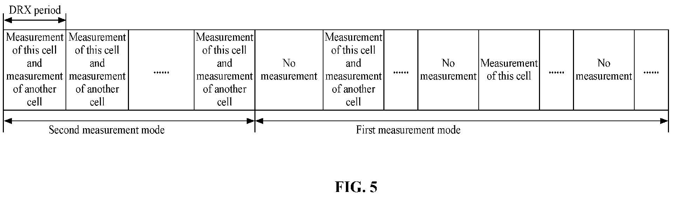

In the present embodiment, the first signaling is configured in the SIB received by the terminal. When the terminal is in the second measurement mode and each signal power Sr1 of this cell obtained within the measurement time period T1 is greater than or equal to the set threshold being Th1, the terminal switches to the first measurement mode, that is, the terminal performs the measurement of this cell once every N2 DRX cycles and performs the measurement of another cell once every N3 DRX cycles. When the terminal is in the first measurement mode and each signal power Sr2 of this cell obtained within the measurement time period T2 is less than the set threshold being Th1, the terminal switches to the second measurement mode, that is, the terminal performs the measurement of this cell and the measurement of another cell once every DRX cycle. For example, FIG. 5 is a schematic diagram of a mode determination method according to the present embodiment. As shown in FIG. 5, in the first measurement mode, the measurement of this cell is performed once every N2 DRX cycles, and the measurement of another cell is performed once every N3 DRX cycles. In the second measurement mode, both the measurement of this cell and the measurement of another cell is performed once every DRX cycle.

In an embodiment, it is assumed that the first signaling configured in the SIB is signal power with a set threshold being Th1 and signal quality with a set threshold of Th2 and the measurement signal is an SSB within the second time window. The first measurement information is signal power Sr1 and signal quality Sq1 of this cell determined according to at least the SSB, and the second measurement information is signal power Sr2 and signal quality Sq2 of this cell determined according to at least the SSB. It is assumed that the first measurement mode is performing the relaxed measurement of this cell and the second measurement mode is performing the traditional measurement of this cell. Optionally, Sr = QrxSSB - Qoffset1, where QrxSSB is an RSRP value obtained according to the SSB, and Qoffset1 is an offset value and consists of one or more parameters. Sq = QqSSB - Qoffset2, where QqSSB is a reference signal receiving quality (RSRQ) value obtained according to the SSB, and Qoffset2 is an offset value and consists of one or more parameters.

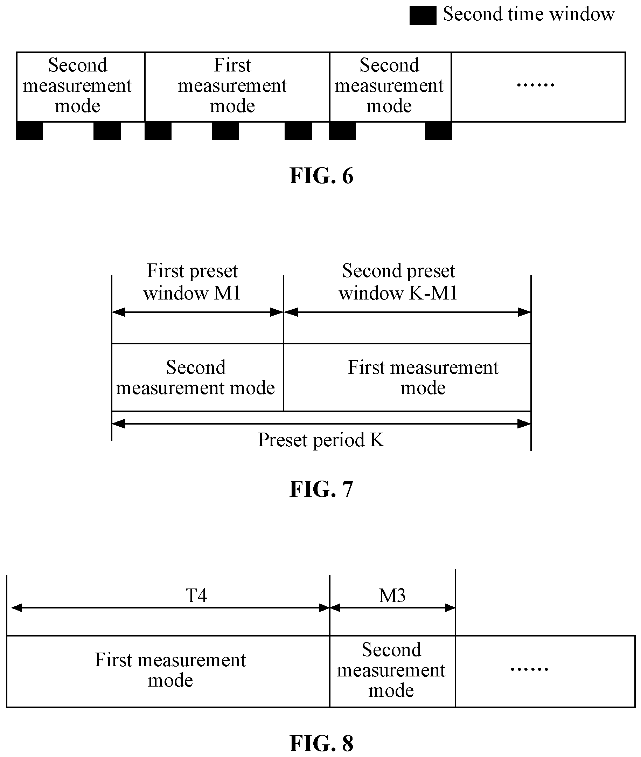

In the present embodiment, the first signaling is configured in the SIB received by the terminal. When the terminal is in the second measurement mode, Sr1 obtained within the measurement time period T1 is greater than or equal to the set threshold being Th1 and Sq1 is greater than or equal to Th2, the terminal switches to the first measurement mode. When the terminal is in the first measurement mode, Sr2 obtained within the measurement time period T2 is less than Thl and Sq2 is less than Th2, the terminal switches to the second measurement mode. For example, FIG. 6 is a schematic diagram of a mode determination method according to the present embodiment. As shown in FIG. 6, in the first measurement mode, the relaxed measurement of this cell is performed. In the second measurement mode, the traditional measurement of this cell is performed.

In an embodiment, it is assumed that the first signaling configured in the SIB is signal power with set thresholds of Th3 and Th4 and the measurement signal is an SSB or an LP-RS. The first measurement information is signal power Sr1 of this cell determined according to at least the SSB, and the second measurement information is signal power Sr3 of this cell determined according to at least the LP-RS. It is assumed that the first measurement mode includes the relaxed measurement of this cell, and the second measurement mode includes the traditional measurement of this cell. Reference power is represented by Sr. Optionally, Sr = QrxSSB - Qoffset1, where QrxSSB is an RSRP value obtained according to the SSB, and Qoffset1 is an offset value and consists of one or more parameters.

In the present embodiment, the first signaling is configured in the SIB received by the terminal. When the terminal is in the second measurement mode and Sr1 is obtained within the measurement time period T1, since each signal power Sr1 of this cell of the SSB is less than Th3, the terminal switches to the first measurement mode. When the terminal is in the first measurement mode and the LP-RS is received by the low-power receiving apparatus within the measurement time period T2 to obtain each Sr3 that is less than Th4, the terminal switches to the second measurement mode.

In an embodiment, it is assumed that the first signaling configured in the SIB is signal power with a set threshold of Th3 and the measurement signal is an SSB. The third measurement information is signal power Sr3 of this cell determined according to at least the SSB. It is assumed that the first measurement mode includes the relaxed measurement of this cell, and the second measurement mode includes the traditional measurement of this cell. Optionally, Sr = QrxSSB - Qoffset1, where QrxSSB is an RSRP value obtained according to the SSB, and Qoffset1 is an offset value and consists of one or more parameters.

In the present embodiment, the first signaling is configured in the SIB received by the terminal. When within each preset period K, the terminal is in the second measurement mode within a first preset window with a length of M1 and the mean of every two Sr3 obtained within the first preset window is greater than or equal to Th3, the terminal is in the first measurement mode within the subsequent second preset window (K-M1). For example, FIG. 7 is a schematic diagram of a mode determination method according to the present embodiment. As shown in FIG. 7, the terminal is in the second measurement mode within the first preset window within the preset period K and is in the first measurement mode within the second preset window of the preset period K.

In an embodiment, it is assumed that the first signaling configured in the SIB is signal power with a set threshold of Th3 and the measurement signal is an LP-RS. The third measurement information is signal power Sr3 of this cell determined according to at least the LP-RS. It is assumed that the first measurement mode includes the relaxed measurement of this cell, and the second measurement mode includes the traditional measurement of this cell. Optionally, Sr = QrxLP-RS - Qoffset3, where QrxLP-RS is an RSRP value obtained according to the LP-RS, and Qoffset3 is an offset value and consists of one or more parameters.

In the present embodiment, the first signaling is configured in the SIB received by the terminal. When within each preset period K, the terminal is in the second measurement mode within a first preset window with a length of M1 and the LP-RS is received by the low-power receiving apparatus within the first preset window to obtain each Sr3 that is greater than or equal to Th3, the terminal is in the first measurement mode within the second preset window (K-M1).

In an embodiment, it is assumed that the first signaling is configured in the SIB. It is assumed that the first measurement mode includes the relaxed measurement of this cell and the second measurement mode includes the traditional measurement of this cell.

In the present embodiment, the first signaling is configured in the SIB received by the terminal. The terminal is in the first measurement mode at the beginning and switches to the second measurement mode after the measurement time period T4, where the time period of the second measurement mode is M3. Then, the terminal switches to the first measurement mode and works for a time period of T4. The rest are done in the same manner. For example, FIG. 8 is a schematic diagram of a mode determination method according to the present embodiment. As shown in FIG. 8, the first measurement mode alternates with the second measurement mode, and the duration of the first measurement mode is T4 and the duration of the second measurement mode is M3 for each time. T4 > M3.

In an embodiment, it is assumed that the first signaling is configured in the SIB. It is assumed that the first measurement mode is performing relaxed measurement of this cell.

In this embodiment, the first signaling is configured in the SIB received by the terminal, and the terminal has always been in the first measurement mode, that is, the measurement of this cell is performed every N DRX cycles.

In an embodiment, it is assumed that the first signaling configured in the SIB is signal power with a set threshold being Th1 and the measurement signal is an SSB or an LP-RS. The first measurement information is signal power Sr1 of this cell determined according to at least the SSB. Optionally, Sr = QrxSSB - Qoffset1, where QrxSSB is an RSRP value obtained according to the SSB, and Qoffset1 is an offset value and consists of one or more parameters. The second measurement information is signal power Sr2 of this cell determined according to at least the LP-RS. Optionally, Sr2 = QrxLP-RS - Qoffset3, where QrxLP-RS is an RSRP value obtained according to the LP-RS, and Qoffset3 is an offset value and consists of one or more parameters. The first working mode includes: a main receiving apparatus of the terminal is turned on; or a low-power receiving apparatus of the terminal is turned off. The second working mode includes: a low-power receiving apparatus of the terminal is turned on; or when the terminal detects an LP-WUS, a main receiving apparatus of the terminal is turned on.

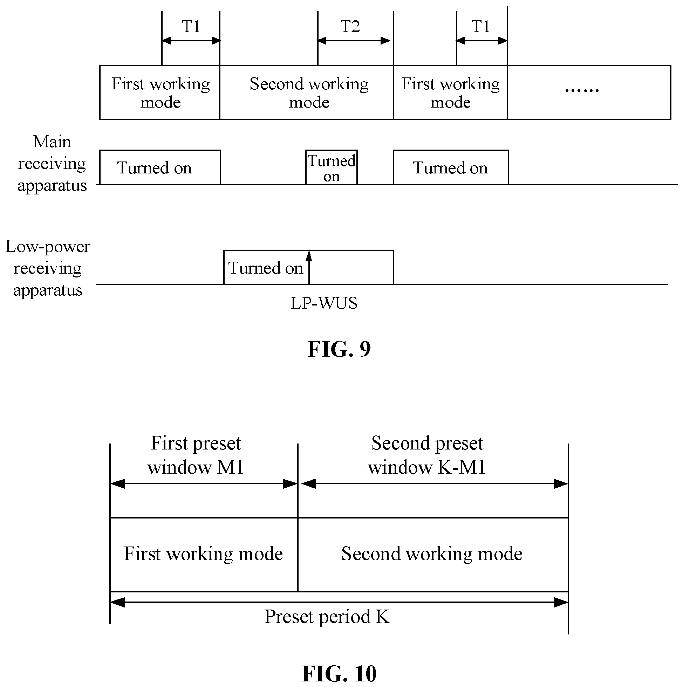

In the present embodiment, the first signaling is configured in the SIB received by the terminal, and the terminal is in the first working mode, that is, the main receiving apparatus is turned on. When Sr1 obtained by the terminal within the measurement time period T1 is greater than or equal to the threshold Th1, the terminal switches to the second working mode, that is, the low-power receiving apparatus of the terminal is turned on. When an LP-WUS is detected, the main receiving apparatus is turned on, and Sr2 is determined according to the LP-RS. When the terminal is in the second working mode and each signal power Sr2 of this cell obtained within the measurement time period T2 is less than the threshold Th1, the terminal switches to the first working mode, the low-power receiving apparatus is turned off, and the main receiving apparatus is turned on. For example, FIG. 9 is a schematic diagram of a mode determination method according to the present embodiment. As shown in FIG. 9, the terminal alternately switches between the first working mode and the second working mode.

In an embodiment, it is assumed that the first signaling configured in the SIB is signal power with a set threshold being Th1 and the measurement signal is an SSB. The first measurement information is signal power Sr1 of this cell determined according to at least the SSB, and the second measurement information is signal power Sr2 of this cell determined according to at least the SSB. Optionally, Sr = QrxSSB - Qoffset1, where QrxSSB is an RSRP value obtained according to the SSB, and Qoffset1 is an offset value and consists of one or more parameters. The first working mode may include: a main receiving apparatus of the terminal is turned on; or a low-power receiving apparatus of the terminal is turned off. The second working mode includes: a low-power receiving apparatus of the terminal is turned on; or when the terminal detects an LP-WUS, the low-power receiver is turned off, a main receiving apparatus of the terminal is turned on, and in this case, the terminal can receive paging and perform measurements.

The first signaling is configured in the SIB received by the terminal, the terminal is in the first working mode, the main receiving apparatus of the terminal is turned on, and the low-power receiving apparatus is turned off. When Sr1 obtained within the measurement time period T1 is greater than or equal to the set threshold being Th1, the terminal can switch to the second working mode, that is, the low-power receiving apparatus of the terminal is turned on. When an LP-WUS is detected, the low-power receiver is turned off, and the main receiving apparatus is turned on to receive paging and perform measurements. When the terminal is in the second working mode and each signal power Sr2 of this cell obtained within the measurement time period T2 is less than the set threshold being Th1, the terminal switches to the first working mode, that is, the low-power receiving apparatus of the terminal is turned off, and the main receiving apparatus of the terminal is turned on.

In an embodiment, it is assumed that the first signaling configured in the SIB is signal power with a set threshold being Th1 and the measurement signal is an SSB. The first measurement information is signal power Sr1 of this cell determined according to at least the SSB, and the second measurement information is signal power Sr2 of this cell determined according to at least the SSB. Optionally, Sr = QrxSSB - Qoffset1, where QrxSSB is an RSRP value obtained according to the SSB, and Qoffset1 is an offset value and consists of one or more parameters.

In the present embodiment, the first signaling is configured in the SIB received by the terminal. When the terminal is in the first working mode, the main receiving apparatus of the terminal is turned on, and the low-power receiving apparatus of the terminal is turned off, and each signal power Sr1 of this cell obtained within T1 is greater than or equal to the threshold 1, the terminal switches to the second working mode, that is, the low-power receiving apparatus of the terminal is turned on. When an LP-WUS is detected, the low-power receiving apparatus is turned off, and the main receiving apparatus is turned on to receive paging, and when a measurement is required, the low-power receiving apparatus is turned off, and the main receiving apparatus is turned on. When the terminal is in the second working mode, the main receiving apparatus of the terminal is turned off, the low-power receiving apparatus of the terminal is turned on, and each signal power Sr2 of this cell obtained within T2 is less than the threshold 1, the terminal switches to the first working mode, that is, the low-power receiving apparatus of the terminal is turned off, and the main receiving apparatus of the terminal is turned on.

In an embodiment, it is assumed that the first signaling configured in the SIB is signal power with a set threshold of Th3 and the third measurement information is signal power Sr3 of this cell determined according to at least the SSB. Optionally, Sr = QrxSSB - Qoffset1, where QrxSSB is an RSRP value obtained according to the SSB, and Qoffset1 is an offset value and consists of one or more parameters.

The first signaling is configured in the SIB received by the terminal. When within each preset period K, the terminal is in the first working mode within a first preset window with a length of M1 and Sr3 obtained within the first preset window is greater than or equal to Th3, the terminal switches to the second working mode within the subsequent second preset window K-M1. For example, FIG. 10 is a schematic diagram of a mode determination method according to the present embodiment. As shown in FIG. 10, the terminal is in the first working mode within the first preset window of the preset period K and is in the second working mode within the second preset window of the preset period K.

In an embodiment, it is assumed that the first signaling is configured in the SIB. The first signaling is configured in the SIB received by the terminal. The terminal works in the second working mode and switches to the first working mode after the measurement time period T4, where the time period of the first working mode is M3. Then, the terminal switches to the first working mode, and so on. The second working mode is a low-power mode, and the terminal does not perform measurements.

In an embodiment, it is assumed that the first signaling is configured in the SIB. The first signaling is configured in the SIB received by the terminal. The terminal works in the second working mode and switches to the first working mode after the measurement time period T4, where the time period of the first working mode is M3. Then, the terminal switches to the first working mode. The rest are done in the same manner. The second working mode is a low-power mode, and the terminal performs measurements according to the LP-WUS.

In an embodiment, it is assumed that the first signaling is configured in the SIB. The first signaling is configured in the SIB received by the terminal. The terminal is in the second working mode and switches to the first working mode after the measurement time period T4, where the time period of the first working mode is M3. Then, the terminal continues to switch back to the first working mode. The rest are done in the same manner. The second working mode is a low-power mode, and the terminal performs measurements according to the LP-RS.

In an embodiment, it is assumed that the first signaling is configured in the SIB. The first signaling is configured in the SIB received by the terminal. The terminal is in the second working mode and switches to the first working mode after the measurement time period T4, where the time period of the first working mode is M3. Then, the terminal continues to switch back to the first working mode. The rest are done in the same manner. The second working mode is a low-power mode, and the terminal performs measurements according to the LP-RS within the third time window.

In an embodiment, it is assumed that the configured first signaling is signal power with a set threshold being Th1 and the measurement signal is an SSB. The first measurement information is signal power Sr1 of this cell determined according to at least the SSB, and the second measurement information is signal power Sr2 of this cell determined according to at least the SSB. It is assumed that the first measurement mode includes the relaxed measurement of this cell and the second measurement mode includes the traditional measurement of this cell.

In the present embodiment, the first signaling is configured in the SIB received by the terminal. When the terminal is in the first working mode (that is, the main receiving apparatus is turned on) and the second measure mode and each signal power Sr1 of this cell obtained within the measurement time period T1 is greater than or equal to the set threshold being Th1, the terminal switches to the first measurement mode and the second working mode, that is, the low-power receiving apparatus of the terminal is turned on. When an LP-WUS is detected, the main receiving apparatus is turned on, and the low-power receiving apparatus is turned off. Since the first measurement mode is the relaxed measurement of this cell, that is, the measurement of this cell needs to be performed once every N DRXs, when the relaxed measurement of this cell is required, the main receiving apparatus is turned on, and the relaxed measurement of this cell is performed. When the terminal is in the first measurement mode and the second working mode, and each signal power Sr2 of this cell obtained within the measurement time periods T2 is less than the set threshold being Th1, the terminal switches to the second measurement mode and the first working mode, that is, the main receiving apparatus is turned on, and the measurement of this cell is performed once every DRX cycle.

In an embodiment, it is assumed that the configured first signaling is signal power with a set threshold being Th1 and the measurement signal is an SSB. The first measurement information is signal power Sr1 of this cell determined according to at least the SSB, and the second measurement information is signal power Sr2 of this cell determined according to at least the SSB. The first measurement mode includes the relaxed measurement of this cell, that is, the measurement of this cell is performed once every N DRX cycles, and the second measurement mode includes the traditional measurement of this cell, that is, the measurement of this cell is performed once every DRX cycle.

In the present embodiment, the first signaling is configured in the SIB received by the terminal. When the terminal is in the first working mode (that is, the main receiving apparatus is turned on) and the second measurement mode (that is, the measurement of this cell is performed once every DRX cycle) and each signal power Sr1 of this cell obtained within the measurement time period T1 is greater than or equal to the set threshold being Th1, the terminal switches to the second working mode and the first measurement mode, and the low-power receiving apparatus of the terminal is turned on. When an LP-WUS is detected and this cell is required to be measured, the low-power receiving apparatus is turned off, and the main receiving apparatus is turned on to receive paging and the measurement of this cell is performed. When the terminal is in the second working mode and the first measurement mode, and each signal power Sr2 of this cell obtained within the measurement time periods T2 is less than the set threshold being Th1, the terminal switches to the first working mode and the second measurement mode, that is, the low-power receiving apparatus of the terminal is turned off, the main receiving apparatus is turned on, and the measurement of this cell is performed once every DRX cycle.

In the technical solutions of the present application, the measurement mode and/or the working mode are determined by the terminal according to the predefined manner. The terminal can determine the switching between the measurement mode and/or the working mode according to the predefined manner so that the power consumption of the terminal can be reduced. In this manner, not only can the energy be saved, but also the life of the terminal can be prolonged.

In an embodiment, the present application further provides another mode determination method. The method is performed by a base station and includes: configuring, by a base station, a first parameter corresponding to a mode, where the first parameter includes at least one of mode signaling, a set threshold, a set time period, or, a second parameter for determining a time window.

The mode signaling may include measurement mode signaling and/or working mode signaling. The second parameter may include information such as the length and/or position of the time window. In the present embodiment, the base station sends the configured first parameter to the terminal so that the terminal performs the mode determination process in the preceding embodiment according to the first parameter.

Embodiments of the present application provide a computer device. The computer device includes a memory, a processor and a computer program stored in the memory and executable by the processor. When executing the computer program, the processor can implement the mode determination method in the preceding embodiment.

One or more processors may be disposed in the computer device, and the processors and the memory in the computer device may be connected via a bus or other means.

As a computer-readable storage medium, the memory may be used for storing software programs and computer-executable programs, such as programs corresponding to the mode determination method in embodiments of the present application. The processor executes software programs, instructions, and modules stored in the memory to perform functions and data processing of the electronic device, that is, perform the mode determination method.

The memory may mainly include a program storage region and a data storage region. The program storage region may store an operating system and a program required by at least one function. The data storage region may store data created based on the use of the computer device. Additionally, the memory may include a high-speed random-access memory and may further include a non-volatile memory such as at least one magnetic disk memory, a flash memory, or another non-volatile solid-state memory. In some examples, the memory may further include memories which are remotely disposed with respect to the processor. These remote memories may be connected to the electronic device via a network. Examples of the network include, but are not limited to, the Internet, an intranet, a local area network, a mobile communication network, and a combination thereof.

Embodiments of the present application further provide a computer-readable storage medium having a computer program stored thereon, where the computer program, when executed by a computer processor, causes the computer processor to perform a mode determination method.

From the preceding description of embodiments, it is apparent to those skilled in the art that the present application may be implemented by software and necessary general-purpose hardware or may be implemented by hardware. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the signal generation method in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those having ordinary skill in the art that some or all steps of the preceding method and function modules/units in the preceding apparatus or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a random-access memory (RAM), a read-only memory (ROM), an electrically erasable programmable read-only memory (EEPROM), a flash memory, or other memory technologies, a compact disc read-only memory (CD-ROM), a digital versatile disc (DVD), or other optical disk storages, a magnetic cassette, a magnetic tape, a magnetic disk, or other magnetic storage devices, or any other medium that can be used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

## Claims

1. A mode determination method, comprising:
determining, by a terminal, at least one of a measurement mode or a working mode according to a predefined manner;
wherein the measurement mode comprises a first measurement mode and a second measurement mode, and the working mode comprises a first working mode and a second working mode.

2. The method according to claim 1, wherein determining, by the terminal, at least one of the measurement mode or the working mode according to the predefined manner comprises:
determining, by the terminal, at least one of the measurement mode or the working mode according to a switching manner, and
wherein when the switching manner satisfies a switching condition, the terminal switches alternately between at least one of the second measurement mode or the first working mode and at least one of the first measurement mode or the second working mode.

3. The method according to claim 2, wherein the switching condition comprises at least one of the following:
the terminal is in at least one of the second measurement mode or the first working mode, and first measurement information obtained within a first set time period meets a set rule; or,
the terminal is in at least one of the first measurement mode or the second working mode, and second measurement information obtained within a second set time period does not meet a set rule.

4. The method according to claim 2, wherein determining, by the terminal, at least one of the measurement mode or the working mode according to the predefined manner comprises:
within a preset period, the terminal is in the second measurement mode within a first preset window;
wherein the method comprises at least one of the following: when third measurement information obtained within the first preset window meets a set rule, the terminal switches to at least one of the first measurement mode or the second working mode within a second preset window; or, when third measurement information does not meet the set rule, the terminal determines to be in at least one of the second measurement mode or the first working mode within a second preset window; and
wherein the preset period consists of the first preset window and the second preset window.

5. The method according to claim 2, wherein determining, by the terminal, at least one of the measurement mode or the working mode according to the predefined manner comprises: the terminal is in the second working mode.

6. The method according to claim 2, wherein determining, by the terminal, at least one of the measurement mode or the working mode according to the predefined manner comprises:
alternately switching, by the terminal, between the second working mode and the first working mode, and
wherein the terminal is in the second working mode for a third set time period or in the first working mode for a fourth set time period.

7. The method according to claim 2, wherein determining, by the terminal, at least one of the measurement mode or the working mode according to the predefined manner comprises:
the terminal is in the first measurement mode.

8. The method according to claim 2, wherein determining, by the terminal, at least one of the measurement mode or the working mode according to the predefined manner comprises:
alternately switching, by the terminal, between the first measurement mode and the second measurement mode, and
wherein the terminal is in the first measurement mode for a fifth set time period or in the second measurement mode for a sixth set time period.

9. The method according to claim 2, wherein the first measurement mode comprises at least one of:
performing relaxed measurement of this cell, performing relaxed measurement of this cell and relaxed measurement of another cell, performing no measurement, performing measurement based on only a low-power wake-up signal (LP-WUS), performing measurement based on only a low-power reference signal (LP-RS), or performing measurement based on an LP-RS within only a first time window.

10. The method according to claim 9, wherein the performing no measurement comprises any one of the following:
a main receiving apparatus of the terminal is not turned on for any measurement;
when no LP-WUS based on paging is detected, a main receiving apparatus of the terminal is not turned on for any measurement; or,
during an LP-WUS detection, a main receiving apparatus of the terminal is not turned on for a measurement.

11. The method according to claim 9, wherein the performing relaxed measurement of this cell comprises at least one of the following:
performing the measurement of this cell once every N discontinuous reception (DRX) cycles, wherein N is a positive integer greater than 1; or
performing the measurement of this cell when paging occurs.

12. The method according to claim 9, wherein the performing relaxed measurement of this cell and relaxed measurement of the another cell comprises at least one of the following:
performing the measurement of this cell and the measurement of the another cell once every N1 DRX cycles, wherein the measurement of this cell and the measurement of the another cell are within a same DRX cycle; or
performing the measurement of this cell once every N2 DRX cycles, and performing the measurement of the another cell once every N3 DRX cycles, and
wherein N3 = k × N2, and N1, N2, N3 and k are positive integers greater than 1.

13. The method according to claim 2, wherein the second measurement mode comprises at least one of performing traditional measurement of this cell, performing traditional measurement of this cell and relaxed measurement of another cell, or, performing traditional measurement of this cell and traditional measurement of another cell.

14. The method according to claim 3 or 4, wherein the measurement information comprises at least one of signal power of a measurement signal, signal quality of a measurement signal, a signal energy value of a measurement signal, a magnitude of a signal amplitude of a measurement signal, whether the measurement signal is detected, or, a number of detected measurement signals.

15. The method according to claim 14, wherein the measurement signal is one or more preset signals in a second time window and the one or more preset signals are at least one of an LP-RS, an LP-WUS, a synchronization and system information block (SSB), a tracking reference signal (TRS), or, a channel state information-reference signal (CSI-RS).

16. The method according to claim 3 or 4, wherein the set rule comprises any one of the following:
a measurement value is greater than a set threshold;
a reference value minus the measurement value is greater than the set threshold;
a mean of a plurality of measurement values is greater than the set threshold;
a mean of measurement values within a second time window is greater than the set threshold; or
a mean of a plurality of measurement values within a third time window is greater than the set threshold.

17. The method according to claim 2, wherein the first working mode comprises at least one of the following:
a main receiving apparatus of the terminal is turned on; or,
a low-power receiving apparatus of the terminal is turned off.

18. The method according to claim 2, wherein the second working mode comprises at least one of the following:
a low-power receiving apparatus of the terminal is turned on;
when the terminal detects at least one of an LP-WUS or the LP-WUS required to be measured, a main receiving apparatus of the terminal is turned on;
the low-power receiving apparatus of the terminal is turned on according to a time window corresponding to the LP-WUS;
the low-power receiving apparatus of the terminal is turned on according to configuration of an LP-RS; or
the low-power receiving apparatus corresponding to the terminal is turned on according to that a host is turned off.

19. The method according to claim 1, wherein determining, by the terminal, at least one of the measurement mode or the working mode according to the predefined manner comprises:
determining, by the terminal, at least one of the measurement mode or the working mode according to the predefined manner when mode signaling is enabled.

20. A mode determination method, comprising:
configuring, by a base station, a first parameter corresponding to a mode, wherein the first parameter comprises at least one of mode signaling, a set threshold, a set time period, or, a second parameter for determining a time window.

21. A computer device, comprising:
a memory, a processor and a computer program stored in the memory and executable by the processor,
wherein when executing the program, the processor implements the mode determination method according to any one of claims 1 to 20.

22. A computer-readable storage medium having a computer program stored thereon,
wherein the computer program, when executed by a processor, causes the processor to implement the mode determination method according to any one of claims 1 to 20.
